# EUROPEAN PATENT SPECIFICATION

(11) **EP 4 378 563 B1**
(45) Date of publication and mention of the grant of the patent: **28.05.2025**
(21) Application number: 22210535.5
(22) Date of filing: 30.11.2022
(51) Int. Cl.: B01D 53/04, B01D 46/00

(54) **ADSORBER STRUCTURE FOR CAPTURING GASEOUS COMPONENTS FROM A GAS MIXTURE AND REACTOR COMPRISING THE ADSORBER STRUCTURE**
ADSORBERSTRUKTUR ZUM ABSCHEIDEN GASFÖRMIGER KOMPONENTEN AUS EINEM GASGEMISCH UND REAKTOR MIT DER ADSORBERSTRUKTUR
STRUCTURE D'ADSORPTION POUR CAPTURER DES COMPOSANTS GAZEUX À PARTIR D'UN MÉLANGE GAZEUX ET RÉACTEUR COMPRENANT LA STRUCTURE D'ADSORPTION

(43) Date of publication of application: 05.06.2024
(73) Proprietor: Dacma GmbH, 22559 Hamburg (DE)
(72) Inventor: Scharrer, Benjamin, 21684 Stade (DE); Özman, Cansu, 22089 Hamburg (DE); Ott, Florian, 22880 Wedel (DE); Spitzner, Jörg, 22559 Hamburg (DE)
(74) Representative: Uexküll & Stolberg

(56) References cited:
- EP-B1- 2 906 811
- WO-A1-2014/170184
- WO-A1-2015/123454
- CA-A- 1 265 754
- US-B1- 11 058 990

## Description

### FIELD OF THE INVENTION

The invention relates to an adsorber structure for capturing gaseous components from a gas mixture and a reactor for separating gaseous components from a gas mixture in an adsorption mode. The invention also relates to the use of the reactor to capture gaseous components from atmospheric air.

### BACKGROUND OF THE INVENTION

Gaseous components such as carbon dioxide, methane or sulfur dioxide make a substantial contribution to air pollution.

In particular the rising CO₂ concentration in the atmosphere increased the demand for research into CO₂ mitigation technologies. Carbon capture utilization and sequestration strategies have focused so far on capturing CO₂ from point sources such as coal-fired power plants, or natural gas (NG) production wells. However, stationary sources account for only one-third of global emissions. In addition, transportation costs arise when transporting the generated CO₂ from the point sources to plants in order to further process the generated CO₂.

Another strategy to capture CO₂ is directly from the air, often termed direct air capture (DAC). Carbon dioxide capture is achieved when atmospheric air makes contact with chemical media, typically an aqueous alkaline solvent or sorbents and is bound thereto. The chemical media is subsequently stripped of CO₂ through the application of energy (namely heat), resulting in CO₂ that can undergo dehydration and compression, while for example regenerating the chemical media for reuse at the same time.

Typically two main DAC systems are used for the capture of CO₂, namely a high temperature (HT) aqueous solution and a low temperature (LT) solid sorbent. The present invention focuses on the low temperature (LT) solid sorbent which is explained in the following.

Typically, technologies regarding the low temperature (LT) solid sorbent use a reactor comprising the sorbent, where adsorption and desorption (regeneration) happen one after another in cycles. In the first step the reactor is open. Atmospheric air goes through the reactor naturally or with the help of fans. At ambient temperature, CO₂ chemically binds to the sorbent and CO₂ depleted air leaves the system. This step is completed when the sorbent is fully saturated with CO₂. In the next step, the fans are switched off, the inlet opening of the reactor is closed and the remaining air is optionally swept out through a pressure drop by vacuuming or inserting steam into the reactor. Then, regeneration happens by heating the reactor to a certain temperature, depending on the sorbent. Released CO₂ is collected and transported out of the reactor for purification, compression or utilization. In order to start another cycle, the reactor is usually cooled down to ambient conditions. The sorbent determines the specific conditions of the cycles. Several different sorbents were proposed in literature, such as amines, amino-polymers, silica (TRI-PE-MCM-41), potassium carbonate (K₂CO₃) and K₂CO₃/₂O₃.

DAC is a relatively new and innovative technology in early commercial stages, which in a long term perspective, along with conventional technologies, can help humankind to control and mitigate climate change. At present the cost for the production of CO₂ using a low temperature (LT) solid sorbent are rather high.

For example WO 2015/185434 A1 discloses a vacuum chamber for a direct air capture process enclosing an interior space for housing an adsorber structure. The vacuum chamber comprises a contiguous circumferential wall structure forming a rectangular or square chamber. The wall structure is closed in an axial direction by an inlet and an outlet axial wall, respectively, each having large circular openings. Both axial walls comprise at least one closing circular stainless steel lid allowing for, in an open position, gas to be circulated through the vacuum chamber for passing an adsorber structure. In a closed position, the lid is adapted to close the interior space and to allow evacuation of the interior space down to pressure of 500 mbar_{abs} or less. In particular the transition from the circular openings in the axial walls to the rectangular or square chamber leads to a comparatively low efficiency of the vacuum chamber as a result of a relatively high flow resistance.

WO 2014/170184 A1 discloses a gas separation unit for the separation of a first gas from a mixture by using a cyclic adsorption/desorption process using a loose particulate sorbent material for gas adsorption. The gas separation unit comprises a rectangular stack of multiple layers which each hold sorbent material. In one embodiment two adjacent stacked layers are arranged, such that gas inlet and outlet channels between the sorbent material layers have a triangular cross section. The rectangular geometry of the stack can also be optimized in terms of efficiency.

It is therefore an object of the present invention to provide an adsorber structure and a reactor comprising the adsorber structure with an improved efficiency and an increased output quantity of a gaseous component captured from atmospheric air.

### SUMMARY OF THE INVENTION

The object is achieved with the adsorber structure as defined in present claim 1. Preferred embodiments are illustrated in the appending sub-claims 2 to 6.

According to the invention, there is provided an adsorber structure for capturing gaseous components such as carbon dioxide, methane or sulfur dioxide from a gas mixture. The adsorber structure comprises a cylindrical center portion extending along a longitudinal axis from a first end to a second end, a first star shaped holder arranged at the first end, and a second star shaped holder arranged at the second end of the center portion. Each of the star shaped holders comprises the same number of multiple arms which extend at a constant angular distance from the center portion in different radial outward directions. The star shaped holders are rotated relative to one another such that each arm of the first star shaped holder is positioned between two adjacent arms of the second star shaped holder when looking along the longitudinal axis from the first end toward the second end of the center portion. In other words: The star shaped holders are rotated relative to one another such that each arm of the first star shaped holder is positioned between two adjacent arms of the second star shaped holder when projecting both star shaped holders into one single plane which extends transversely to the longitudinal axis of the center portion. The adsorber structure further comprises sorbent elements for adsorbing the gaseous components such as carbon dioxide, methane or sulfur dioxide from the gas mixture. Two sorbent elements extend from each arm of the first star shaped holder to the respective two adjacent arms of the second star shaped holder along the longitudinal axis of the center portion. A gap between adjacent sorbent elements extending from two circumferentially adjacent arms of the first star shaped holder tapers towards the corresponding arm of the second star shaped holder such that a gas mixture streaming from the first end to the second end of the center portion penetrates the adjacent sorbent elements.

As the sorbent elements extend over the total length of the center portion from the first end to the second end and as adjacent sorbent elements extending from two circumferentially adjacent arms of the first star shaped holder form a tapering gap, the adsorber structure provides an optimized adsorbing surface. Moreover, as the gap between adjacent adsorber elements tapers from the first end towards the second end of the center portion and thus tapers in the flow direction of a gas mixture streaming into the adsorber structure, a uniform wetting of the sorbent elements by the gas mixture is ensured.

In an embodiment of the invention the adsorber structure further comprises connecting members extending from each arm of the first star shaped holder to the respective two adjacent arms of the second star shaped holder. Each of the connecting members, the corresponding arm of the first star shaped holder and one of the respective two adjacent arms of the second star shaped holder form a frame for supporting the sorbent elements. The frame provides a modular construction of the adsorber structure. The sorbent elements can be easily inserted in and removed from the frame. This allows an easy maintenance of the adsorber structure and the sorbent elements. The frame allows an installation of different sorbent elements comprising e.g. different sorbent materials as long as the sorbent elements comprise the geometric dimensions of the frame. The sorbent elements containing a particular sorbent material are preferably chosen depending on the gaseous component to be capture from the atmospheric air. For example the frame is capable to receive first sorbent elements containing a first sorbent material which is suitable to capture carbon dioxide from the atmospheric air. Preferably, the frame may also be capable to alternatively receive second sorbent elements containing a second sorbent material which is suitable to capture methane or sulfur dioxide from the atmospheric air. Preferably, the sorbent elements are formed by at least one sorbent module comprising a metallic structure which forms a receiving portion for receiving sorbent material in the form of bulk material. Alternatively, the sorbent modules may also be formed by a self-supporting structure such as textile structures or structures made from a plastic material which contain the sorbent material. Optionally, each of the connecting members encloses an angle with a corresponding plane extending along the longitudinal axis of the center portion and the corresponding arm of the first star shaped holder to which the connecting member connects. The angle lies in the range of about 3° to 15°, preferably in the range of about 3.5° to 6°, more preferably is about 4.5°. The angle between the connecting elements and the corresponding plane correspond to a number of arms of the first star shaped holder. For example, if the angle is 4.5° the first star shaped holder has 10 arms.

In another embodiment of the invention the adsorber structure is configured to be inserted into a housing of a reactor for separating gaseous components such as carbon dioxide, methane or sulfur dioxide from a gas mixture, wherein the adsorber structure is configured to support the housing of the reactor. The adsorber structure is part of the load bearing structure of the housing such that the adsorber structure supports the housing and takes loads acting on the housing. Thus, the wall thicknesses of the housing and thus the weight of the housing can be reduced. Reducing the weight of the housing also reduces the heat capacity of the housing and thus the energy needed to heat up the reactor to a temperature for regenerating the sorbent element during a desorption mode of the reactor. Optionally the housing has a cylindrical shape.

In an embodiment of the invention the adsorber structure further comprises sealing elements arranged on the connecting elements and being configured to seal the connecting elements against the inner wall of the housing. The sealing elements prohibit that the gas mixture entering the adsorber structure bypasses a sorbent element by streaming between the connecting element and the housing.

In an embodiment of the invention each sorbent element is formed by at least one sorbent module comprising two parallel oriented grid structures and sorbent material. The two grid structures are arranged at a distance from one another thereby forming a receiving portion for the sorbent material. The sorbent material is arranged between the grid structures in the receiving portion. Optionally, an amine-functionalized ion exchanger resin is used as a solid sorbent material. Preferably, the grid structures are made of metal.

In another embodiment of the invention each of the arms of the first star shaped holder and the second star shaped holder comprise a cross sectional area oriented transversely to the radial outward extension of the arms, wherein the cross sectional area of each of the arms has a triangular shape or a U-shape. A triangular or a U-shaped cross sectional area forms a flow-optimized cross section which reduces the flow resistance of the arms of the star shaped holders.

In an embodiment of the invention the arms of the first star shaped holder are oriented in such a way that the cross sectional areas of the arms of the first star shaped holder widens when looking along the longitudinal axis from the first end toward the second end of the center portion, and wherein the arms of the second star shaped holder are oriented in such a way that the cross sectional areas of the arms of the second star shaped holder tapers when looking along the longitudinal axis from the first end toward the second end of the center portion. This provides a flow-optimized entrance of the gas mixture into as well as a flow-optimized exit of the gas mixture out of the adsorber structure. The wording when looking along the longitudinal axis from the first end toward the second end of the center portion is to be understood as in a direction along the longitudinal axis from the first end toward the second end of the center portion.

The above object is also achieved with a reactor for separating gaseous components such as carbon dioxide, methane or sulfur dioxide from a gas mixture in an adsorption mode comprising the features of claim 7. Preferred embodiments are set out in dependent claims 8 to 14.

According to the present invention the reactor comprises a housing having an inlet portion and an outlet portion and an adsorber structure as described above positioned in the housing between the inlet portion and the outlet portion. Optionally, the adsorber structure is positioned in a mid part of the housing. Preferably, the mid part of the housing together with the adsorber structure is adapted to be mounted in an ISO standardized and derivative intermodal shipping container such as a 20ft or 40ft container. Preferably, the mid part of the housing is positioned transversely to the longitudinal direction of the shipping container. The inlet portion and the outlet portion of the reactor are mounted to the outside of the container thereby being fluidically connected to the adsorber structure and the mid part of the housing inside the container. Preferably, the housing is adapted to receive the adsorber structure in a form fitting manner. The adsorber structure is fixed in position in the housing and is adapted to take loads acting on the housing. Thus, the wall thickness of the housing and its mass can be reduced. Preferably, the reactor is constructed modularly. Each part of the housing such as the mid part, the inlet portion and the outlet portion may be formed as modules which comprise the same connecting interfaces in the form of flanges and can thus easily be mounted together.

In an embodiment of the invention the housing comprises one or more shells, in particular two half shells which are adapted to circumferentially surround and abut the adsorber structure. Preferably, the housing has a cylindrical shape. A cylindrical shape is advantageous as it provides sufficient strength to the housing when a negative pressure is applied inside the housing. Preferably, the housing is adapted to withstand an absolute-negative pressure of up to 10 mbar without being damaged. Optionally, the mid part of the housing is formed by two half shells. Preferably, each of the half shells comprises flanges along the longitudinal axis of the center portion. The flanges facilitate mounting of the two half shells together. Optionally, the half shells and the adsorber structure are adapted to form a form fit when the two half shells enclose the adsorber structure. Forming the housing, in particular the mid part of the housing, by two half shells is advantageous as the adsorber structure is easily accessible for repair or maintenance. In order to access the adsorber structure only one half shell has to be removed from the second half shell which holds the adsorber structure.

In another embodiment of the invention the reactor further comprises a blower for drawing the gas mixture from the inlet portion through the adsorber structure towards the outlet portion. The inlet portion and the outlet portion each comprise a closure for closing the inlet portion and the outlet portion, respectively, in a desorption mode of the reactor, in which an absolute-negative pressure in the housing between the two closures is drawn and the sorbent elements of the adsorber structure are regenerated. Preferably, a vacuum pump is assigned to the reactor. The vacuum pump is configured to draw an absolute-negative pressure of up to up to 10 mbar in the housing between the two closures. The closures are preferably adapted to open and close the inlet and outlet portions in cycles. In particular, the closures are adapted to open the reactor during the adsorption mode of the reactor and to close the reactor during the desorption mode of the reactor.

In an embodiment of the invention the inlet portion and the outlet portion comprise a rectangular shape when looking along the longitudinal axis from the first end toward the second end of the center portion. In other words: the inlet portion and the outlet portion comprise a rectangular cross section in a plane extending transversely to the longitudinal axis of the center portion. Each closure is formed by multiple panels, preferably by two panels, which are rotatably mounted to the inlet portion and the outlet portion, respectively, such that the panels of each closure are rotatable between an open state and a closed state. In case the closure is formed by two panels both axes of rotation of the panels are preferably arranged transverse and at a distance to the longitudinal axis of the center portion. Both axes of rotation are parallel to each other. In the open state the panels are oriented parallel to the longitudinal axis of the central portion. In the closed state the panels are oriented transversely to the longitudinal axis of the central portion. The closures are adapted to allow the gas mixture to be drawn by the blower from the inlet portion through the adsorber structure towards the outlet portion in the open state and to prohibit the gas mixture to enter the inlet or the outlet portion in the closed state. Preferably, when being positions in the open state the closures are arranged parallel to the streaming direction of the gas mixture streaming from the first end to the second end of the center portion. Thus, the closures form a negligible flow resistance to the gas mixture. Each closure may comprise a support formed by a strut in the middle of the inlet portion and the outlet portion, respectively. Each closure may comprise an electromagnetic fastener mounted on the strut to pull the closures towards the adsorber structure and to facilitate drawing an absolute-negative pressure in the housing between the closures. A sealing may be provided on the strut in order to seal the strut against the panels during the desorption mode of the reactor. The rectangular shape of the inlet and outlet portion facilitates the manufacturing of the inlet and outlet potion and also simplifies the realization of the closures. Preferably, the inlet portion has a rectangular funnel shape.

In another embodiment of the invention the reactor further comprises a flushing element for flushing the adsorber structure, wherein the flushing element is positioned between the inlet portion and the adsorber structure. The flushing element is adapted to dispense a flushing gas, preferably containing steam, to wet and heat the sorbent elements. The sorbent elements are flushed during the desorption mode of the reactor. Desorption of the sorbent elements is achieved at a temperature of the sorbent elements of 50°C to 100°C, preferably of 70°C to 90°C, most preferably at 80°C. The flushing element is housed in the housing of the reactor. The flushing element may form a further module comprising flanges to connect the flushing element e.g. to the inlet portion and the mid part of the housing, respectively.

In an embodiment of the invention the flushing element comprises an inner circular portion, an outer ring shaped portion, and conduits extending at a constant annular distance from the inner circular portion to the outer ring shaped portion in an radial outward direction, wherein each conduit is fluidically connected to a supply line via openings such as through holes in the outer ring shaped portion and comprises multiple openings such as holes or slits adapted to dispense flushing gas from the supply line into the reactor. Preferably, the flushing element and the first star shaped holder of the adsorber structure are concentrically arranged. Optionally, the flushing element is rotated relative to the first star shaped holder such that each of the conduits of the flushing element is positioned between two annular adjacent arms of the first star shaped holder when looking along the longitudinal axis from the first end towards the second end of the center portion. In other words: The flushing element is rotated relative to the first star shaped holder such that each of the conduits of the flushing element is positioned between two annular adjacent arms of the first star shaped holder when projecting the flushing element and the firs star shaped holders into one single plane which extends transversely to the longitudinal axis of the center portion. Thus, each conduit of the flushing element is positioned in a gap between adjacent sorbent elements, the gap extending from two circumferentially adjacent arms of the first star shaped holder and tapering towards the corresponding arm of the second star shaped holder. This position of the flushing element relative to the sorbent elements allows a uniform wetting of the sorbent elements and thus an optimized heating of the sorbent elements via the flushing gas.

In another embodiment of the invention the reactor further comprises an extraction element for extracting process gas from the reactor, wherein the extraction element is positioned between the adsorber structure and the outlet portion. The extraction element is adapted to extract process gas including the flushing gas together with the gaseous component such as CO₂ which has been released from the sorbent material. Preferably, the process gas is drawn through the extraction element by the same pump which draws the negative pressure in the reactor during the desorption mode of the reactor. The extraction element is housed in the housing of the reactor. The extraction part may form a further module comprising flanges to connect the extraction element e.g. to the outlet portion and the mid part of the housing, respectively.

In an embodiment of the invention the extraction element comprises an inner circular portion, an outer ring shaped portion, and conduits extending at a constant annular distance from the inner circular portion to the outer ring shaped portion in an radial outward direction, wherein each conduit is fluidically connected to an extraction line via openings such as through holes in the outer ring shaped portion and comprises multiple openings such as holes or slits adapted to extract process gas from the reactor into the extraction line. Preferably, the extraction element and the flushing element have the same geometry. Preferably, the extraction element and the second star shaped holder of the adsorber structure are concentrically arranged. Optionally, the extraction element is rotated relative to the second star shaped holder such that each of the conduits of the extraction element is positioned between two annular adjacent arms of the second star shaped holder when looking along the longitudinal axis from the second end towards the first end of the center portion. In other words: The extraction element is rotated relative to the second star shaped holder such that each of the conduits of the extraction element is positioned between two annular adjacent arms of the second star shaped holder when projecting the extraction element and the second star shaped holders into one single plane which extends transversely to the longitudinal axis of the center portion. This position of the extraction element relative to the sorbent elements allows an optimized flow control of the process gas.

The above object is also achieved with a use of the reactor of the present invention to capture a gaseous component such as carbon dioxide, methane or sulfur dioxide from atmospheric air. Preferably, the reactor is positioned in a 20ft or 40ft ISO standardized and derivative intermodal shipping containers transverse to the longitudinal direction of the container. This allows an easy and fast worldwide transport and installation of the reactor. Optionally, multiple reactors, such as six, eight, twelve or fourteen reactors, are arranged in one container. The reactors may be arranged on different levels in the container, such as e.g. on a lower level and on an upper level.

### BRIEF DESCRIPTION OF THE FIGURES

The invention will now be described in connection with an exemplary embodiment shown in the Figures in which:
- Figure 1: shows a perspective view of a reactor according to the present invention,
- Figure 2: shows a cross-sectional view of the reactor of Figure 1,
- Figure 3: shows an adsorber structure according to the present invention,
- Figure 4a: shows an inlet portion of the reactor of Figure 1 in detail,
- Figure 4b: shows a flushing element of the reactor of Figure 1 in detail,
- Figure 5a: shows an outlet portion of the reactor of Figure 1 in detail,
- Figure 5b: shows an extraction element of the reactor of Figure 1 in detail and
- Figure 6: shows a schematic view of the reactor of Figure 1 together with peripheral components.

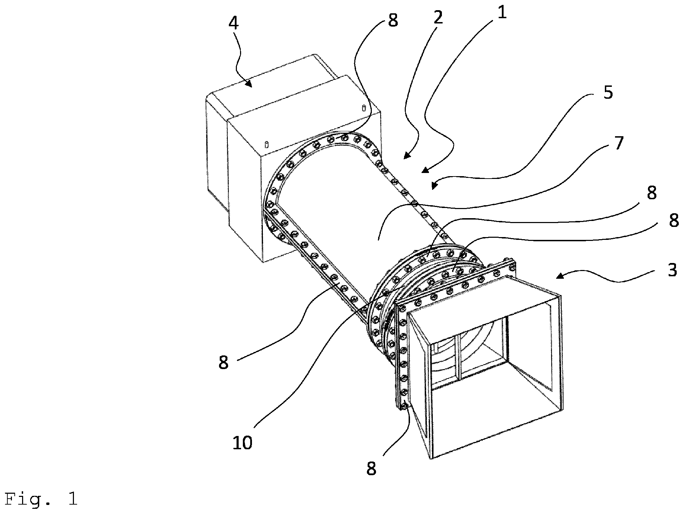

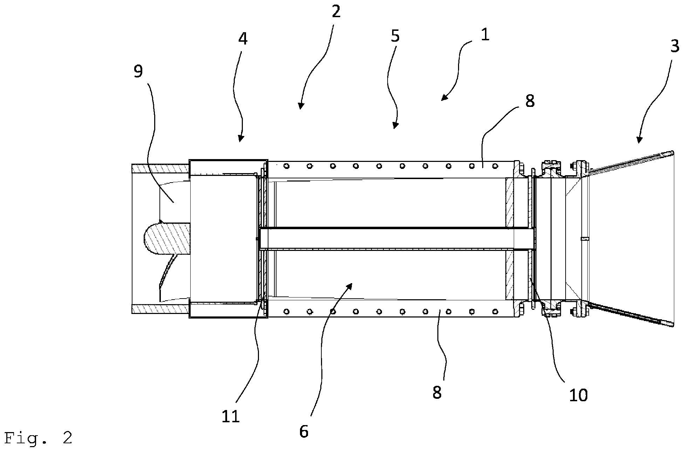

Figures 1 and 2 show a DAC reactor 1 for separating gaseous components such as carbon dioxide, methane or sulfur dioxide from a gas mixture such as atmospheric air, in an adsorption mode. The DAC reactor 1 is in particular adapted for separating carbon dioxide from atmospheric air in an adsorption mode.

The reactor 1 comprises a housing 2 having an inlet portion 3, an outlet portion 4 and a mid part 5 positioned between the inlet portion 3 and the outlet portion 4. The reactor 1 further comprises an adsorber structure 6 positioned in the mid part 5 of the housing 2.

The mid part 5 of the housing 2 has two half shells 7 which are adapted to circumferentially surround and abut the adsorber structure 6. Each half shell 7 comprises flanges 8 extending in longitudinal direction of the reactor 1 and which allow a connection of the two half shells 7 via screws (not shown) .

The reactor 1 further comprises a blower 9 for drawing the gas mixture from the inlet portion 3 through the adsorber structure 6 towards the outlet portion 4.

The reactor 1 further comprises a flushing element 10 for flushing the adsorber structure 6 with a flushing gas during a desorption mode of the reactor 1. The flushing element 10 is positioned between the inlet portion 3 and the adsorber structure 6, in particular between the inlet portion 3 and the mid part 5 of the housing.

The reactor 1 also comprises an extraction element 11 for extracting process gas from the reactor 1 in the desorption mode. The process gas includes the flushing gas dispensed form the flushing element 10 and CO₂ released from the adsorber structure 6.

Each part of the housing 2 such as the mid part 5, the inlet portion 3 and the outlet portion 4 are formed as modules which comprise the same connecting interfaces in the form of flanges 8 and can thus easily be mounted together. Moreover, the blower 9, the flushing element 10 and the extraction element 11 are also housed in the housing 2 and form further modules comprising flanges 8. The flanges 8 are used to connect the blower 9, the flushing element 10 and the extraction element 11 to the outlet portion 4, to the inlet portion 3 as well as the mid part 5 and to the mid part 5 as well as the outlet portion 4 of the housing, respectively.

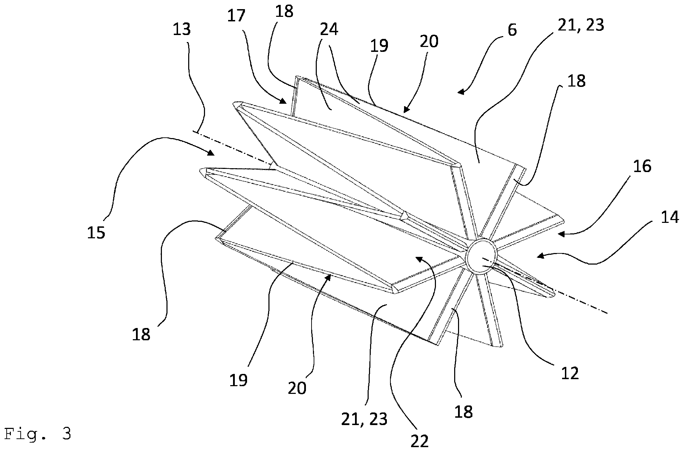

Figure 3 shows the adsorber structure 6 in detail. The adsorber structure 6 is in particular adapted to capture gaseous carbon dioxide from a gas mixture, e.g. atmospheric air. The adsorber structure 6 comprises a cylindrical center portion 12 extending along a longitudinal axis 13 from a first end 14 to a second end 15.

A first star shaped holder 16 is arranged at the first end 14. A second star shaped holder 17 is arranged at the second end 15 of the center portion 12. Each of the star shaped holders 16, 17 comprises the same number of multiple arms 18 which extend at a constant angular distance from the center portion 12 in different radial outward directions. Each of the arms 18 of the first star shaped holder 16 and the second star shaped holder 17 comprise a cross sectional area oriented transversely to the radial outward extension of the arms 18. The cross sectional area of each of the arms 18 has a triangular shape. The arms 18 of the first star shaped holder 16 are oriented in such a way that the cross sectional areas of the arms 18 of the first star shaped holder 16 widen when looking along the longitudinal axis 13 from the first end 14 toward the second end 15 of the center portion 12. The arms 18 of the second star shaped holder 17 are oriented in such a way that the cross sectional areas of the arms 18 of the second star shaped holder 17 taper when looking along the longitudinal axis 13 from the first end 14 toward the second end 15 of the center portion 12.

The star shaped holders 16, 17 are rotated relative to one another such that each arm 18 of the first star shaped holder 16 is positioned between two adjacent arms 18 of the second star shaped holder 17 when looking along the longitudinal axis 13 from the first end 14 toward the second end 15 of the center portion 12.

The adsorber structure 6 further comprises connecting members 19 extending from each arm 18 of the first star shaped holder 16 to the respective two adjacent arms 18 of the second star shaped holder 17. Each of the connecting members 19, the corresponding arm 18 of the first star shaped holder 16 and one of the respective two adjacent arms 18 of the second star shaped holder 17 form a frame 20. Sealing elements (not shown) are arranged on the connecting elements 19 and are configured to seal the connecting elements 19 against an inner wall of the mid part 5 of the housing 2.

The adsorber structure 6 further comprises sorbent elements 21 for adsorbing the gaseous components, in particular carbon dioxide, from the gas mixture. The sorbent elements 21 are supported by the frame 20. Two sorbent elements 21 extend from each arm 18 of the first star shaped holder 16 to the respective two adjacent arms 18 of the second star shaped holder 17 along the longitudinal axis 13 of the center portion 12. A gap 22 between adjacent sorbent elements 21 extending from two circumferentially adjacent arms 18 of the first star shaped holder 16 tapers towards the corresponding arm 18 of the second star shaped holder 17 such that a gas mixture streaming from the first end 14 to the second end 15 of the center portion 12 penetrates the adjacent sorbent elements 21.

Each sorbent element 21 is formed by at least one sorbent module 23 comprising two parallel oriented grid structures 24 and sorbent material (not shown). The two grid structures 24 are arranged at a distance from one another thereby forming a receiving portion for the sorbent material. The sorbent material is arranged between the grid structures 24 in the receiving portion. Preferably, an amine-functionalized ion exchanger resin is used as a solid sorbent material.

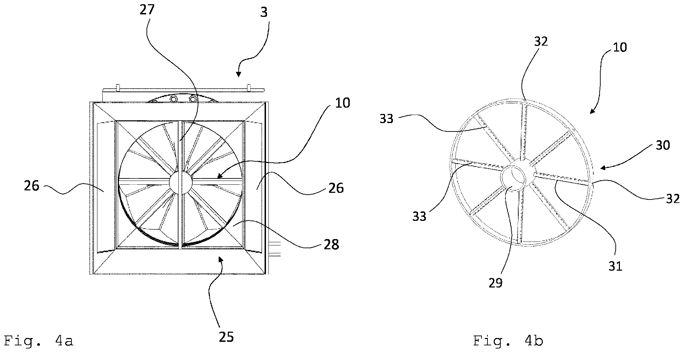

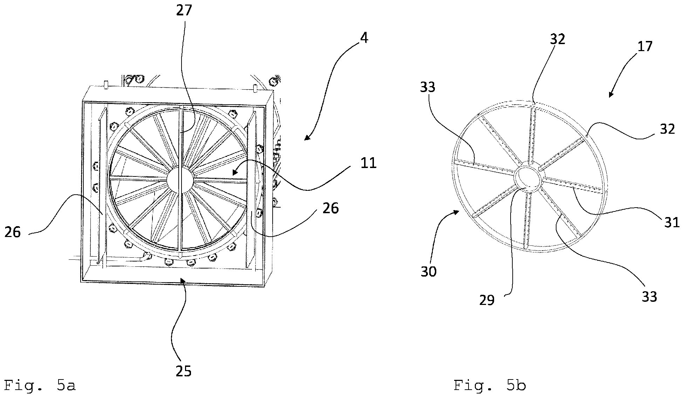

Figures 4a and 5a show the inlet portion 3 and the outlet portion 4 of the reactor 1 in detail.

The inlet portion 3 and the outlet portion 4 each comprise a closure 25 for closing the inlet portion 3 and the outlet portion 4, respectively, in the desorption mode of the reactor 1. In the desorption mode an absolute-negative pressure is drawn in the housing 2 between the two closures 25 and the sorbent elements 21 of the adsorber structure 6 are regenerated.

The inlet portion 3 and the outlet portion 4 comprise a rectangular shape when looking along the longitudinal axis 13 from the first end 14 toward the second end 15 of the center portion 12. In particular, the inlet portion 3 comprises a rectangular funnel shape. Each closure 25 is formed by two panels 26 which are rotatably mounted to the inlet portion 3 and the outlet portion 4, respectively, such that the panels 26 of each closure 25 are rotatable between an open state and a closed state. Each panel 26 is rotatable around an axis of rotation. Both axes of rotation are arranged transverse and at a distance to the longitudinal axis 13 of the center portion 12. Both axes of rotation are parallel to each other. The panels 26 are oriented parallel to the longitudinal axis 13 (see Fig. 2) of the center portion 12 in the open state of the closure 25. In the closed state of the closure 25 the panels 26 are oriented transversely to the longitudinal axis 13 of the center portion12. Each closure comprises a support formed by a strut 27 in the middle of the inlet portion 3 and the outlet portion 4, respectively. A sealing (not shown) is provided on the strut 27 in order to seal the strut 27 against the panels 26 during the desorption mode of the reactor.

As regards the inlet portion 3, the strut 27 is mounted on an adapter piece 28 which connects the rectangular shape of the inlet portion 3 to the circular shape of the flushing element 10 (see Fig. 4a). The adapter piece 28 may comprise additional sealings (not shown) to seal the adapter piece 28 against the panels 26.

As regards the outlet portion 4, the strut 27 is mounted on the extraction element 11 (see Fig. 5a). The extraction element 11 may comprise additional sealings (not shown) to seal the extraction element 11 against the panels 26.

Each closure 25 comprises an electromagnetic fastener (not shown) mounted on the strut 27 to pull the panels 26 of the closures 25 towards the adsorber structure 6 and to facilitate drawing of a negative pressure in the housing 2 between the closures 25.

Figures 4b and 5b show the flushing element 10 and the extraction element 11 in detail. The flushing element 10 and the extraction element comprise an inner circular portion 29, an outer ring shaped portion 30, and conduits 31 extending at a constant annular distance from the inner circular portion 29 to the outer ring shaped portion 30 in a radial outward direction. Each conduit 31 of the flushing element 10 is fluidically connected to a supply line (not shown) via openings 32 formed as through holes in the outer ring shaped portion 30 and comprises multiple openings 33 such as holes or slits adapted to dispense flushing gas from the supply line into the reactor 1. The conduits 31 of the extraction element 11 are fluidically connected to an extraction line (not shown) via openings 32 formed as through holes in the outer ring shaped portion 30 and comprise multiple openings 33 such as holes or slits adapted to extract process gas from the reactor 1 into the extraction line.

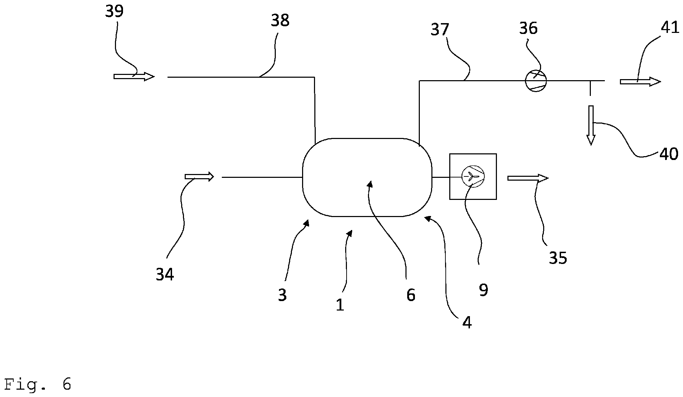

Fig. 6 shows the reactor 1 together with peripheral components. In the following the use of the reactor 1 to capture CO₂ from atmospheric air will be explained with reference to Figures 1 to 6.

In the adsorption mode the blower 9 draws the gas mixture in the form of ambient air from the inlet portion 3, as indicated by arrow 34, through the adsorber structure 6 towards the outlet portion 4. The sorbent elements 21 capture CO₂ out of the ambient air and CO₂ depleted air leaves the reactor 1 as indicated by arrow 35. This step is completed when the sorbent elements 21 are fully saturated with CO₂.

In order to regenerate the sorbent elements 21 the reactor 1 is switched into the desorption mode. The blower 9 is turned off and the closures 25 of the inlet portion 3 and the outlet portion 4, respectively, are closed. A vacuum pump 36 which is connected to the reactor 1 via an extraction line 37 draws an absolute-negative pressure of up to 10 mbar in the reactor 1.

Flushing gas is provided to a supply line 38 as indicated by arrow 39. The supply line 38 is connected to the flushing element 10 at the inlet portion 3 of the reactor 1. The flushing gas is subsequently heated and is supplied via the supply line 38 to the flushing element 10. The flushing element 10 dispenses the flushing gas into the reactor 1 at the inlet portion 3 thereby uniformly wetting and heating the sorbent elements 21. The sorbent elements 21 are heated to a temperature of 50°C to 100°, preferably of 70°C to 90°C, most preferably of 80°C. This temperature range/temperature causes a desorption of CO₂ from the sorbent elements 21. The vacuum pump 36 draws a process gas comprising the flushing gas and the released CO₂ out of the reactor 1 into the extraction line 37 via the extraction element 11 at the outlet portion 4 of the reactor 1. CO₂ and flushing gas are separated and leave the extraction line 37 through different outlets (arrow 40 for flushing gas and arrow 41 for CO₂).

The above described desorption mode and adsorption mode form a cycle which is repeated over and over again during operation of the reactor 1.

### Reference Numerals

- 1: Reactor
- 2: Housing
- 3: Inlet portion
- 4: Outlet portion
- 5: Mid part (housing)
- 6: Adsorber structure
- 7: Half shell (housing)
- 8: Flanges (mid part)
- 9: Blower
- 10: Flushing element
- 11: Extraction element
- 12: Center portion (adsorber structure)
- 13: Longitudinal axis (center portion)
- 14: First end (center portion)
- 15: Second end (center portion)
- 16: First star shaped holder (adsorber structure)
- 17: Second star shaped holder (adsorber structure)
- 18: Arms (star shaped holders)
- 19: Connecting members (adsorber structure)
- 20: Frame (adsorber structure)
- 21: Sorbent elements (adsorber structure)
- 22: Gap (adsorber structure)
- 23: Sorbent module (sorbent elements)
- 24: Grid structure (sorbent module)
- 25: Closure
- 26: Panels (closure)
- 27: Strut (closure)
- 28: Adapter piece
- 29: Inner circular potion (flushing/extraction element)
- 30: Outer ring shaped portion (flushing/extraction element)
- 31: Conduits (flushing/extraction element)
- 32: Openings (Trough holes; flushing/extraction element)
- 33: openings (holes or slits; conduits)
- 34: Arrow (ambient air)
- 35: Arrow (CO₂ depleted air)
- 36: Vacuum pump
- 37: Extraction line
- 38: Supply line
- 39: Arrow (water)
- 40: Arrow (air)
- 41: Arrow (CO2)

## Claims

1. An adsorber structure for capturing gaseous components from a gas mixture, the adsorber structure (6) comprising a cylindrical center portion (12) extending along a longitudinal axis (13) from a first end (14) to a second end (15),
a first star shaped holder (16) arranged at the first end (14), and
a second star shaped holder (17) arranged at the second end (15) of the center portion (12),
wherein each of the star shaped holders (16, 17) comprises the same number of multiple arms (18) which extend at a constant angular distance from the center portion (12) in different radial outward directions,
wherein the star shaped holders (16, 17) are rotated relative to one another such that each arm (18) of the first star shaped holder (16) is positioned between two adjacent arms (18) of the second star shaped holder (17) when looking along the longitudinal axis (13) from the first end (14) toward the second end (15) of the center portion (12), wherein the adsorber structure (6) further comprises sorbent elements (21) for adsorbing the gaseous components from the gas mixture,
wherein two sorbent elements (21) extend from each arm (18) of the first star shaped holder (16) to the respective two adjacent arms (18) of the second star shaped holder (17) along the longitudinal axis (12) of the center portion (12) and,
wherein a gap (22) between adjacent sorbent elements (21) extending from two circumferentially adjacent arms (18) of the first star shaped holder (16) tapers towards the corresponding arm (18) of the second star shaped holder (17) such that a gas mixture streaming from the first end (14) to the second end (15) of the center portion (12) penetrates the adjacent sorbent elements (21).

2. The adsorber structure of claim 1, wherein the adsorber structure (6) further comprises connecting members (19) extending from each arm (18) of the first star shaped holder (16) to the respective two adjacent arms (18) of the second star shaped holder (17) and wherein each of the connecting members (19), the corresponding arm (18) of the first star shaped holder (16) and one of the respective two adjacent arms (18) of the second star shaped holder (17) form a frame (20) for supporting the sorbent elements (21).

3. The adsorber structure of any of the preceding claims, wherein the adsorber structure (6) is configured to be inserted into a housing (2) of a reactor (1) for separating gaseous components from a gas mixture, wherein the adsorber structure (6) is configured to support the housing (2) of the reactor (1).

4. The adsorber structure of claims 2 and 3, wherein the adsorber structure (6) further comprises sealing elements arranged on the connecting elements (19) and being configured to seal the connecting elements (19) against the inner wall of the housing (2).

5. The adsorber structure of any of the preceding claims, wherein each sorbent element (21) is formed by at least one sorbent module (23) comprising two parallel oriented grid structures (24) and sorbent material, wherein the two grid structures (24) are arranged at a distance from one another thereby forming a receiving portion for the sorbent material and, wherein the sorbent material is arranged between the grid structures (24) in the receiving portion.

6. The adsorber structure of any of the preceding claims, wherein each of the arms (18) of the first star shaped holder (16) and the second star shaped holder (17) comprise a cross sectional area oriented transversely to the radial outward extension of the arms (18), wherein the cross sectional area of each of the arms (18) has a triangular shape or a U-shape.

7. The adsorber structure of claim 6, wherein the arms (18) of the first star shaped holder (16) are oriented in such a way that the cross sectional areas of the arms (18) of the first star shaped holder (16) widen when looking along the longitudinal axis (13) from the first end (14) toward the second end (15) of the center portion (12), and wherein the arms (18) of the second star shaped holder (17) are oriented in such a way that the cross sectional areas of the arms (18) of the second star shaped holder (17) taper when looking along the longitudinal axis (13) from the first end (14) toward the second end (15) of the center portion (12).

8. A reactor for separating gaseous components from a gas mixture in an adsorption mode comprising
a housing (2) having an inlet portion (3) and an outlet portion (4) and
an adsorber structure (6) according to any one of claims 1 to 6 positioned in the housing (2) between the inlet portion (3) and the outlet portion (4).

9. The reactor of claim 8, wherein the housing (2) comprises one or more shells, in particular two half shells (7) which are adapted to circumferentially surround and abut the adsorber structure (6).

10. The reactor of claim 8, wherein the reactor (1) further comprises a blower (9) for drawing the gas mixture from the inlet portion (3) through the adsorber structure (6) towards the outlet portion (4), wherein the inlet portion (3) and the outlet portion (4) each comprise a closure (25) for closing the inlet portion (3) and the outlet portion (4), respectively, in a desorption mode of the reactor (1), in which an absolute-negative pressure in the housing (2) between the two closures (25) is drawn and the sorbent elements (21) of the adsorber structure (6) are regenerated.

11. The reactor of claim 10, wherein the inlet portion (3) and the outlet portion (4) comprise a rectangular shape when looking along the longitudinal axis (13) from the first end (14) toward the second end (15) of the center portion (12), wherein each closure (25) is formed by two panels (26) which are rotatably mounted to the inlet portion (3) and the outlet portion (4), respectively, such that the panels (26) of each closure (25) are rotatable between an open state and a closed state, wherein the panels (26) are oriented parallel to the longitudinal axis (13) of the center portion(12) in the open state of the closure (25) and wherein the panels (26) are oriented transversely to the longitudinal axis (13) of the center portion(12) in the closed state of the closure (25).

12. The reactor of claim 8, wherein the reactor (1) further comprises a flushing element (10) for flushing the adsorber structure (6), wherein the flushing element (10) is positioned between the inlet portion (3) and the adsorber structure (6).

13. The reactor of claim 12, wherein the flushing element (10) comprises an inner circular portion 29), an outer ring shaped portion (30), and conduits (31) extending at a constant annular distance from the inner circular portion (29) to the outer ring shaped portion (30) in an radial outward direction, wherein each conduit (31) is fluidically connected to a supply line via openings (32) in the outer ring shaped portion (30) and comprises multiple openings (33) adapted to dispense flushing gas from the supply line into the reactor (1).

14. The reactor of claim 8, wherein the reactor (1) further comprises an extraction element (11) for extracting process gas from the reactor (1), wherein the extraction element (11) is positioned between the adsorber structure (6) and the outlet portion (4).

15. The reactor of claim 14, wherein the extraction element (11) comprises an inner circular portion (29), an outer ring shaped portion (30), and conduits (31) extending at a constant annular distance from the inner circular portion (29) to the outer ring shaped portion (30) in an radial outward direction, wherein each conduit (31) is fluidically connected to an extraction line via openings (32) in the outer ring shaped portion (30) and comprises multiple openings (33) adapted to extract process gas from the reactor (1) into the extraction line.

16. A use of the reactor of any of claims 8 to 15 to capture gaseous components from atmospheric air.

## Patentansprüche

1. Adsorberstruktur zum Auffangen gasförmiger Komponenten aus einem Gasgemisch, wobei die Adsorberstruktur (6) umfasst
einen zylindrischen Mittelteil (12), der sich entlang einer Längsachse (13) von einem ersten Ende (14) zu einem zweiten Ende (15) erstreckt,
einen ersten sternförmigen Halter (16), der am ersten Ende (14) angeordnet ist, und einen zweiten sternförmigen Halter (17), der am zweiten Ende (15) des Mittelteils (12) angeordnet ist,
wobei jeder der sternförmigen Halter (16, 17) die gleiche Anzahl von mehreren Armen (18) aufweist, die sich in einem konstanten Winkelabstand von dem Mittelteil (12) in unterschiedliche radiale Richtungen nach außen erstrecken,
wobei die sternförmigen Halter (16, 17) relativ zueinander verdreht sind, so dass jeder Arm (18) des ersten sternförmigen Halters (16) zwischen zwei benachbarten Armen (18) des zweiten sternförmigen Halters (17) positioniert ist, wenn man entlang der Längsachse (13) vom ersten Ende (14) zum zweiten Ende (15) des Mittelteils (12) schaut,
wobei die Adsorberstruktur (6) ferner Sorptionselemente (21) zum Adsorbieren der gasförmigen Komponenten aus dem Gasgemisch umfasst,
wobei sich zwei Sorptionselemente (21) von jedem Arm (18) des ersten sternförmigen Halters (16) zu den jeweiligen zwei benachbarten Armen (18) des zweiten sternförmigen Halters (17) entlang der Längsachse (12) des Mittelteils (12) erstrecken und,
wobei sich ein Spalt (22) zwischen benachbarten Sorptionselementen (21), die sich von zwei in Umfangsrichtung benachbarten Armen (18) des ersten sternförmigen Halters (16) erstrecken, in Richtung des entsprechenden Arms (18) des zweiten sternförmigen Halters (17) verjüngt, so dass ein Gasgemisch, das vom ersten Ende (14) zum zweiten Ende (15) des Mittelteils (12) strömt, die benachbarten Sorptionselemente (21) durchdringt.

2. Adsorberstruktur nach Anspruch 1, wobei die Adsorberstruktur (6) ferner Verbindungselemente (19) umfasst, die sich von jedem Arm (18) des ersten sternförmigen Halters (16) zu den jeweiligen zwei benachbarten Armen (18) des zweiten sternförmigen Halters (17) erstrecken, und wobei jedes der Verbindungselemente (19), der entsprechende Arm (18) des ersten sternförmigen Halters (16) und einer der jeweiligen zwei benachbarten Arme (18) des zweiten sternförmigen Halters (17) einen Rahmen (20) zum Tragen der Sorbenselemente (21) bilden.

3. Adsorberstruktur nach einem der vorhergehenden Ansprüche, wobei die Adsorberstruktur (6) ausgebildet ist, in ein Gehäuse (2) eines Reaktors (1) zur Abtrennung gasförmiger Komponenten aus einem Gasgemisch eingesetzt zu werden, wobei die Adsorberstruktur (6) ausgebildet ist, das Gehäuses (2) des Reaktors (1) abzustützen.

4. Adsorberstruktur nach einem der Ansprüche 2 und 3, wobei die Adsorberstruktur (6) ferner Dichtungselemente umfasst, die an den Verbindungselementen (19) angeordnet und so konfiguriert sind, dass sie die Verbindungselemente (19) gegen die Innenwand des Gehäuses (2) abdichten.

5. Adsorberstruktur nach einem der vorhergehenden Ansprüche, wobei jedes Sorptionselement (21) durch mindestens ein Sorptionsmodul (23) gebildet wird, das zwei parallel ausgerichtete Gitterstrukturen (24) und Sorptionsmaterial umfasst, wobei die beiden Gitterstrukturen (24) in einem Abstand zueinander angeordnet sind und dadurch einen Aufnahmebereich für das Sorptionsmaterial bilden und wobei das Sorptionsmaterial zwischen den Gitterstrukturen (24) im Aufnahmebereich angeordnet ist.

6. Adsorberstruktur nach einem der vorhergehenden Ansprüche, wobei jeder der Arme (18) des ersten sternförmigen Halters (16) und des zweiten sternförmigen Halters (17) eine Querschnittsfläche aufweist, die quer zur radialen Erstreckung der Arme (18) nach außen ausgerichtet ist, wobei die Querschnittsfläche jedes der Arme (18) eine Dreiecksform oder U-Form aufweist.

7. Adsorberstruktur nach Anspruch 6, wobei die Arme (18) des ersten sternförmigen Halters (16) so ausgerichtet sind, dass sich die Querschnittsflächen der Arme (18) des ersten sternförmigen Halters (16) bei Betrachtung entlang der Längsachse (13) vom ersten Ende (14) zum zweiten Ende (15) des Mittelteils (12) hin erweitern, und wobei die Arme (18) des zweiten sternförmigen Halters (17) so ausgerichtet sind, dass sich die Querschnittsflächen der Arme (18) des zweiten sternförmigen Halters (17) verjüngen, wenn man entlang der Längsachse (13) von dem ersten Ende (14) zu dem zweiten Ende (15) des Mittelteils (12) schaut.

8. Reaktor zur Abtrennung gasförmiger Komponenten aus einem Gasgemisch in einem Adsorptionsmodus, umfassend
ein Gehäuse (2) mit einem Einlassabschnitt (3) und einem Auslassabschnitt (4) und
eine Adsorberstruktur (6) nach einem der Ansprüche 1 bis 6, die in dem Gehäuse (2) zwischen dem Einlassabschnitt (3) und dem Auslassabschnitt (4) angeordnet ist.

9. Reaktor nach Anspruch 8, wobei das Gehäuse (2) eine oder mehrere Schalen, insbesondere zwei Halbschalen (7), umfasst, die so beschaffen sind, dass sie die Adsorberstruktur (6) umfangsmäßig umgeben und an ihr anliegen.

10. Reaktor nach Anspruch 8, wobei der Reaktor (1) ferner ein Gebläse (9) umfasst, um das Gasgemisch vom Einlassabschnitt (3) durch die Adsorberstruktur (6) zum Auslassabschnitt (4) zu ziehen, wobei der Einlassabschnitt (3) und der Auslassabschnitt (4) jeweils einen Verschluss (25) zum Verschließen des Einlassabschnitts (3) und des Auslassabschnitts (4) in einem Desorptionsmodus des Reaktors (1) umfassen, in dem ein negativer absoluter Druck im Gehäuse (2) zwischen den beiden Verschlüssen (25) erzeugt wird und die Sorptionselemente (21) der Adsorberstruktur (6) regeneriert werden.

11. Reaktor nach Anspruch 10, wobei der Einlassabschnitt (3) und der Auslassabschnitt (4) eine rechteckige Form aufweisen, wenn man entlang der Längsachse (13) vom ersten Ende (14) zum zweiten Ende (15) des Mittelabschnitts (12) schaut, wobei jeder Verschluss (25) durch zwei Platten (26) gebildet wird, die drehbar am Einlassabschnitt (3) bzw. am Auslassabschnitt (4) angebracht sind, so dass die Platten (26) jedes Verschlusses (25) zwischen einem offenen Zustand und einem geschlossenen Zustand drehbar sind, wobei die Platten (26) in dem offenen Zustand des Verschlusses (25) parallel zu der Längsachse (13) des Mittelteils (12) ausgerichtet sind und wobei die Platten (26) in dem geschlossenen Zustand des Verschlusses (25) quer zu der Längsachse (13) des Mittelteils (12) ausgerichtet sind.

12. Reaktor nach Anspruch 8, wobei der Reaktor (1) ferner ein Spülelement (10) zum Spülen der Adsorberstruktur (6) umfasst, wobei das Spülelement (10) zwischen dem Einlassabschnitt (3) und der Adsorberstruktur (6) angeordnet ist.

13. Reaktor nach Anspruch 12, wobei das Spülelement (10) einen inneren kreisförmigen Abschnitt (29), einen äußeren ringförmigen Abschnitt (30) und Leitungen (31) umfasst, die sich in einem konstanten Winkelabstand von dem inneren kreisförmigen Abschnitt (29) zu dem äußeren ringförmigen Abschnitt (30) in einer radial nach außen gerichteten Richtung erstrecken, wobei jede Leitung (31) über Öffnungen (32) in dem äußeren ringförmigen Abschnitt (30) mit einer Versorgungsleitung strömungstechnisch verbunden ist und mehrere Öffnungen (33) umfasst, die dafür ausgelegt sind, Spülgas aus der Versorgungsleitung in den Reaktor (1) abzugeben.

14. Reaktor nach Anspruch 8, wobei der Reaktor (1) ferner ein Extraktionselement (11) zum Extrahieren von Prozessgas aus dem Reaktor (1) umfasst, wobei das Extraktionselement (11) zwischen der Adsorberstruktur (6) und dem Auslassabschnitt (4) angeordnet ist.

15. Reaktor nach Anspruch 14, wobei das Extraktionselement (11) einen inneren kreisförmigen Abschnitt (29), einen äußeren ringförmigen Abschnitt (30) und Leitungen (31) umfasst, die sich in einem konstanten Winkelabstand von dem inneren kreisförmigen Abschnitt (29) zu dem äußeren ringförmigen Abschnitt (30) in radialer Richtung nach außen erstrecken, wobei jede Leitung (31) über Öffnungen (32) in dem äußeren ringförmigen Abschnitt (30) mit einer Extraktionsleitung strömungstechnisch verbunden ist und mehrere Öffnungen (33) umfasst, die dazu geeignet sind, Prozessgas aus dem Reaktor (1) in die Extraktionsleitung zu extrahieren.

16. Verwendung des Reaktors nach einem der Ansprüche 8 bis 15 zum Auffangen gasförmiger Komponenten aus der atmosphärischen Luft.

## Revendications

1. Structure d'adsorbeur pour capturer des composants gazeux depuis un mélange gazeux, la structure d'adsorbeur (6) comprenant une partie centrale cylindrique (12) s'étendant le long d'un axe longitudinal (13) depuis une première extrémité (14) jusqu'à une seconde extrémité (15),
un premier support en forme d'étoile (16) agencé au niveau de la première extrémité (14), et
un second support en forme d'étoile (17) agencé au niveau de la seconde extrémité (15) de la partie centrale (12)
dans laquelle chacun des supports en forme d'étoile (16, 17) comprend le même nombre de bras (18) multiples qui s'étendent à une distance angulaire constante de la partie centrale (12) dans différentes directions radiales vers l'extérieur,
dans laquelle les supports en forme d'étoile (16, 17) sont tournés relativement l'un à l'autre de telle manière que chaque bras (18) du premier support en forme d'étoile (16) est positionné entre deux bras (18) adjacents du second support en forme d'étoile (17) en regardant le long de l'axe longitudinal (13) de la première extrémité (14) vers la seconde extrémité (15) de la partie centrale (12),
dans laquelle la structure d'adsorbeur (6) comprend en outre des éléments sorbants (21) pour adsorber les composants gazeux depuis le mélange gazeux,
dans laquelle deux éléments sorbants (21) s'étendent depuis chaque bras (18) du premier support en forme d'étoile (16) vers les deux bras (18) adjacents respectifs du second support en forme d'étoile (17) le long de l'axe longitudinal (12) de la partie centrale (12)
et,
dans laquelle un espacement (22) entre des éléments sorbants (21) adjacents s'étendant depuis deux bras (18) circonférentiellement adjacents du premier support en forme d'étoile (16) se resserre vers le bras (18) correspondant du second support en forme d'étoile (17) de telle manière qu'un mélange gazeux s'écoulant depuis la première extrémité (14) jusqu'à la seconde extrémité (15) de la partie centrale (12) pénètre dans les éléments sorbants (21) adjacents.

2. Structure d'adsorbeur selon la revendication 1, dans laquelle la structure d'adsorbeur (6) comprend en outre des éléments de connexion (19) s'étendant depuis chaque bras (18) du premier support en forme d'étoile (16) jusqu'aux deux bras (18) adjacents respectifs du second support en forme d'étoile (17) et dans laquelle chacun des éléments de connexion (19), le bras (18) correspondant du premier support en forme d'étoile (16) et l'un des deux bras (18) adjacents respectifs du second support en forme d'étoile (17) forment un cadre (20) pour supporter les éléments sorbants (21).

3. Structure d'adsorbeur selon l'une quelconque des revendications précédentes, dans laquelle la structure d'adsorbeur (6) est configurée pour être insérée dans un carter (2) d'un réacteur (1) pour séparer des composants gazeux d'un mélange de gaz, dans laquelle la structure d'adsorbeur (6) est configurée pour supporter le carter (2) du réacteur (1).

4. Structure d'adsorbeur selon les revendications 2 et 3, dans laquelle la structure d'adsorbeur (6) comprend en outre des éléments d'étanchéité agencés sur les éléments de connexion (19) et étant configurés pour étanchéiser les éléments de connexion (19) contre la paroi intérieure du carter (2).

5. Structure d'adsorbeur selon l'une quelconque des revendications précédentes, dans laquelle chaque élément sorbant (21) est formé par au moins un module sorbant (23) comprenant deux structures de grille (24) orientées parallèles et un matériau sorbant, dans laquelle les deux structures de grille (24) sont agencées à une distance l'une de l'autre formant ainsi une partie de réception pour le matériau sorbant et, dans laquelle le matériau sorbant est agencé entre les structures de grille (24) dans la partie de réception.

6. Structure d'adsorbeur selon l'une quelconque des revendications précédentes, dans laquelle chacun des bras (18) du premier support en forme d'étoile (16) et du second support en forme d'étoile (17) comprend une surface en section transversale orientée transversalement à l'extension radiale vers l'extérieur des bras (18), dans laquelle la surface en section transversale de chacun des bras (18) a une forme triangulaire ou une forme en U.

7. Structure d'adsorbeur selon la revendication 6, dans laquelle les bras (18) du premier support en forme d'étoile (16) sont orientés de telle manière que les surfaces en section transversale des bras (18) du premier support en forme d'étoile (16) s'élargissent quand on regarde suivant l'axe longitudinal (13) de la première extrémité (14) vers la seconde extrémité (15) de la partie centrale (12), et dans laquelle les bras (18) du second support en forme d'étoile (17) sont orientés de telle manière que les surfaces en section transversale des bras (18) du second support en forme d'étoile (17) rétrécissent quand on regarde suivant l'axe longitudinal (13) de la première extrémité (14) vers la seconde extrémité (15) de la partie centrale (12).

8. Réacteur pour séparer des composants gazeux d'un mélange gazeux dans un mode d'adsorption comprenant
un carter (2) comportant une partie d'entrée (3) et une partie de sortie (4) et
une structure d'adsorbeur (6) selon l'une quelconque des revendications 1 à 6 positionnée dans le carter (2) entre la partie d'entrée (3) et la partie de sortie (4).

9. Réacteur selon la revendication 8, dans lequel le carter (2) comprend une ou plusieurs coques, en particulier deux demi-coques (7) qui sont adaptées pour entourer circonférentiellement et venir en butée sur la structure d'adsorbeur (6).

10. Réacteur selon la revendication 8, dans lequel le réacteur (1) comprend en outre une ventilation (9) pour amener le mélange gazeux depuis la partie d'entrée (3) à travers la structure d'adsorbeur (6) jusqu'à la partie de sortie (4), dans lequel la partie d'entrée (3) et la partie de sortie (4) comprennent chacune une fermeture (25) pour fermer la partie d'entrée (3) et la partie de sortie (4), respectivement, dans un mode de désorption du réacteur (1), dans lequel une pression absolue négative dans le carter (2) entre les deux fermetures (25) est amenée et les éléments sorbants (21) de la structure d'adsorbeur (6) sont régénérés.

11. Réacteur selon la revendication 10, dans lequel la partie d'entrée (3) et la partie de sortie (4) comprennent une forme rectangulaire quand on les voit suivant l'axe longitudinal (13) de la première extrémité (14) vers la seconde extrémité (15) de la partie centrale (12), dans lequel chaque fermeture (25) est formée par deux panneaux (26) qui sont montés de manière tournante sur la partie d'entrée (3) et la partie de sortie (4), respectivement, de telle manière que les panneaux (26) de chaque fermeture (25) peuvent tourner entre un état ouvert et un état fermé, dans lequel les panneaux (26) sont orientés parallèlement à l'axe longitudinal (13) de la partie centrale (12) dans l'état ouvert de la fermeture (25) et dans lequel les panneaux (26) sont orientés transversalement à l'axe longitudinal (13) de la partie centrale (12) dans l'état fermé de la fermeture (25).

12. Réacteur selon la revendication 8, dans lequel le réacteur (1) comprend en outre un élément de rinçage (10) pour rincer la structure d'adsorbeur (6), dans lequel l'élément de rinçage (10) est positionné entre la partie d'entrée (3) et le la structure d'adsorbeur (6).

13. Réacteur selon la revendication 12, dans lequel l'élément de rinçage (10) comprend une partie circulaire intérieure (29), une partie de forme annulaire extérieure (30), et des conduits (31) s'étendant à une distance annulaire constante de la partie circulaire intérieure (29) jusqu'à la partie de forme annulaire extérieure (30) dans une direction radiale vers l'extérieur, dans lequel chaque conduit (31) est connecté fluidiquement à une ligne d'alimentation via des ouvertures (32) dans la partie de forme annulaire extérieure (30) et comprend de multiples ouvertures (33) adaptées pour distribuer du gaz de rinçage depuis la ligne d'alimentation dans le réacteur (1).

14. Réacteur selon la revendication 8, dans lequel le réacteur (1) comprend en outre un élément d'extraction (11) pour extraire du gaz de process du réacteur (1), dans lequel l'élément d'extraction (11) est positionné entre la structure d'adsorbeur (6) et la partie de sortie (4).

15. Réacteur selon la revendication 14, dans lequel l'élément d'extraction (11) comprend une partie circulaire intérieure (29), une partie de forme annulaire extérieure (30), et des conduits (31) s'étendant à une distance annulaire constante de la partie circulaire intérieure (29) jusqu'à la partie de forme annulaire extérieure (30) dans une direction radiale vers l'extérieur, dans lequel chaque conduit (31) est connecté fluidiquement à une ligne d'extraction via des ouvertures (32) dans la partie de forme annulaire extérieure (30) et comprend de multiples ouvertures (33) adaptées pour extraire du gaz de process du réacteur (1) dans la ligne d'extraction.

16. Utilisation du réacteur selon l'une quelconque des revendications 18 à 15 pour capturer des composants gazeux depuis l'air atmosphérique.
